(19) **Europäisches Patentamt / European Patent Office / Office européen des brevets**

(11) **EP 2 466 532 A1**

(12) **EUROPÄISCHE PATENTANMELDUNG**

(43) Veröffentlichungstag:
20.06.2012 Patentblatt 2012/25

(51) Int Cl.:
*G06N 3/00* (2006.01)

(21) Anmeldenummer: 10195450.1

(22) Anmeldetag: 16.12.2010

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME

(71) Anmelder: **Siemens Aktiengesellschaft**
**80333 München (DE)**

(72) Erfinder:
• **Hartmann, Dirk**
**83550, Emmering (DE)**
• **Klein, Wolfram**
**85579, Neubiberg (DE)**

(54) **Verfahren und Vorrichtung zum Ermitteln eines Navigationsgraphen für Ströme von Individuen und Verfahren zum Bestimmen einer Navigationsstrategie**

(57) Verfahren und Vorrichtung zum Ermitteln eines Navigationsgraphen für Ströme von Individuen und Verfahren zum Bestimmen einer Navigationsstrategie

Die Erfindung betrifft ein Verfahren zum Ermitteln eines Navigationsgraphen (5) für Ströme von Individuen in einem Gebiet (1) mit einer Vielzahl von Hindernissen, mit den Schritten des Ermittelns des jeweils kürzesten Abstands zu einem der Vielzahl von für jeden Punkt des Gebiets (1) zum Erzeugen eines Abstandsfelds für das Gebiet (1), des Berechnens von Höhenzügen des Abstandsfelds, und des Erzeugens von Knotenpunkten (4a, 4b, 4c) und Kanten (5a, 5b) des Navigationsgraphen (5) auf der Basis der berechneten Höhenzüge. Weiterhin betrifft die Erfindung ein Verfahren zum Bestimmen einer Navigationsstrategie eines Individuums entlang eines Navigationsgraphen (5), mit den Schritten des Ermittelns der jeweiligen von einem Knotenpunkt (4b) zu jeweils einem einer Vielzahl von benachbarten Knotenpunkte (4c) entlang jeweils einer die zwei Knotenpunkte verbindenden Kante (5b) des Navigationsgraphen (5), und des Treffens einer Reiseentscheidung für das Individuum entlang des Navigationsgraphen (5) in Abhängigkeit von den ermittelten Reisezeiten.

FIG 2

EP 2 466 532 A1

**Beschreibung**

Verfahren und Vorrichtung zum Ermitteln eines Navigationsgraphen für Ströme von Individuen und Verfahren zum Bestimmen einer Navigationsstrategie

Die vorliegende Erfindung bezieht sich auf ein Verfahren und eine Vorrichtung zum Ermitteln eines Navigationsgraphen für Ströme von Individuen in einem Gebiet mit Hindernissen und Verfahren zum Bestimmen einer Navigationsstrategie entlang eines Navigationsgraphen in einem Gebiet mit Hindernissen.

Stand der Technik

Simulationen von Strömen von Individuen spielen in der Verkehrsphysik eine immer größere Rolle. Bei der Beschreibung von Verkehrsprozessen, beispielsweise der kollektiven Bewegung von Fahrzeugen oder Fußgängern entlang vorgegebener Routen, zum Beispiel in Gebäuden, entlang von Straßenzügen oder Fußwegen, oder auf vordefinierten Wegen bei Großveranstaltungen, auf Bahnhöfen oder dergleichen, ist es von großer Bedeutung, die Systemumgebung möglichst wirklichkeitsgetreu wiedergeben zu können, um die darin ablaufenden Bewegungsprozesse zur Simulation realitätsnaher Abläufe an die entsprechenden Rand- und Zwangsbedingungen besser anpassen zu können.

Insbesondere bei komplexen Geometrien, beispielsweise bei weitläufigen Gebieten mit einer hohen Anzahl von Routenwahlmöglichkeiten und/oder in hohem Maße nicht geradlinigen Routenführungen ist es erforderlich, das Gebiet, in dem eine Simulation von Verkehrsprozessen stattfinden soll, möglichst realistisch in ein Modell abzubilden. Dabei treten oft wiederstreitende Ziele auf: Zum Einen soll das Gebietsmodell so detailgetreu wie möglich sein, um realistische Simulationen zu ermöglichen, zum Anderen ist eine Simplifizierung des Modells nötig, um die erforderliche Rechenzeit der Simulationen in vertretbarem Rahmen zu halten.

Ein effektiver Ansatzpunkt für die Simulation von Verkehrsprozessen ist die Bildung von Graphenmodellen. Graphenmodelle beruhen auf einer gemäß der Topologie des Simulationsgebiets gebildeten Graphen mit Knotenpunkten, die Kreuzungen und Abzweigungen modellieren, und Kanten, die mögliche Routen zwischen den Knotenpunkten darstellen. Mithilfe derartiger Graphen kann eine Navigation von Individuen entlang der Kanten des Graphen modelliert werden, um Informationen über Verkehrsflüsse in dem Gebiet in Abhängigkeit von verschiedenen externen Parametern wie Reisegeschwindigkeit, Ortskenntnis, Verkehrsteilnehmertyp, Reiseempfehlungen oder dergleichen zu gewinnen.

Eine Möglichkeit, ein Graphenmodell bzw. einen Graphen für ein Gebiet zu erstellen, besteht in einer manuellen Modellierung. Dabei werden Hindernisse in dem Gebiet wie beispielsweise Wände, Gebäude, Absperrungen oder dergleichen von dem jeweils mit der Modellierung befassten Bearbeiter per Hand berücksichtigt, und ein Graph anhand der sinnvollen Routenmöglichkeiten erstellt. Dies ist jedoch zeitaufwändig und für große Gebiete häufig nicht praktikabel. Eine Automatisierung der Graphenmodellierung ist dagegen häufig schwierig, da jedes Gebiet üblicherweise individuelle Merkmale aufweist und die automatisiert erzeugten Graphen eine Vielzahl redundanter Kanten und/oder Knotenpunkten aufweisen oder aufgrund einer Übersimplifizierung nicht alle möglichen Routen abbilden.

Es besteht daher ein Bedarf an Möglichkeiten, Graphenmodelle automatisch für beliebige Gebiete mit vorgegebener Hindernisstruktur mit hinreichender Genauigkeit und Präzision zu erzeugen, die eine wirklichkeitsnahe Grundlage zur Simulation von Verkehrsprozessen von Individuen bereitstellen.

Offenbarung der Erfindung

Eine grundlegende Idee der Erfindung besteht darin, ein einfaches Verfahren anzugeben, mit welchem minimale, also nicht redundante Graphen für die Simulation von Verkehrsprozessen auf beliebigen Gebieten mit vorgegebener Hindernisstruktur automatisch konstruiert werden können. Dies wird durch eine geschickte Wahl das Gebiet mit den Hindernissen modellierender Skalarfelder für den Hindernisabstand bewerkstelligt, aus dem durch entsprechende Berechnungsoperationen Kanten und Knotenpunkte zur Erzeugung eines das Gebiet modellierenden Graphen bzw. Navigationsgraphen extrahiert werden können. Die so erzeugten Graphen sind zugleich minimal und realitätsgetreu, und können als Grundlage für eine Simulation von Verkehrsprozessen, insbesondere für die Simulation von Navigationsstrategien einzelner Individuen entlang des Navigationsgraphen dienen.

Die vorliegende Erfindung schafft daher ein Verfahren nach Anspruch 1 zum Ermitteln eines Navigationsgraphen für Ströme von Individuen in einem Gebiet mit einer Vielzahl von Hindernissen, mit den Schritten des Ermittelns des jeweils kürzesten Abstands zu einem der Vielzahl von Hindernissen für jeden Punkt des Gebiets zum Erzeugen eines Abstandsfelds für das Gebiet, des Berechnens von Höhenzügen des Abstandsfelds, und des Erzeugens von Knotenpunkten und Kanten des Navigationsgraphen auf der Basis der berechneten Höhenzüge.

Vorteilhafterweise erfolgt das Berechnen von Höhenzügen des Abstandsfelds mithilfe eines Laplace-Filters für das Abstandsfeld. Dieser Mechanismus bietet eine einfache Berechnungsmöglichkeit mit geringem Ressourcen- und Zeitaufwand.

Gemäß einer Ausführungsform ist das Gebiet ein zweidimensionales Gebiet, und die Vielzahl der Hindernisse stellen für die Individuen unpassierbare Bereiche des Gebiets dar. Dabei können die Individuen Personen sein, und der Navigationsgraph kann mögliche Bewegungsrouten der Personen beschreiben. Gemäß einer weiteren Ausführungsform wird der kürzeste Abstand in einer Manhattan-Metrik oder einer Euklidischen Metrik bestimmt.

Die Erfindung schafft ferner ein Verfahren nach Anspruch 8 zum Ermitteln eines Navigationsgraphen für Ströme von Individuen in einem Gebiet mit einer ersten Vielzahl von Hindernissen, mit den Schritten:

Ermitteln des jeweils kürzesten Abstands von einem der ersten Vielzahl von Hindernissen für jeden Punkt des Gebiets zum Erzeugen eines ersten Abstandsfelds für das Gebiet;
Berechnen von ersten Höhenzügen des ersten Abstandsfelds;
Erzeugen von ersten Knotenpunkten und ersten Kanten auf der Basis der berechneten ersten Höhenzüge;
Hinzufügen eines oder mehrerer zusätzlicher Hindernisse in dem Gebiet zu der ersten Vielzahl von Hindernissen zum Erzeugen einer zweiten Vielzahl von Hindernissen;
Ermitteln des jeweils kürzesten Abstands von einem der zweiten Vielzahl von Hindernissen für jeden Punkt des Gebiets zum Erzeugen eines zweiten Abstandsfelds für das Gebiet; Berechnen von zweiten Höhenzügen des zweiten Abstandsfelds; Erzeugen von zweiten Knotenpunkten und zweiten Kanten auf der Basis der berechneten zweiten Höhenzüge; und
Kombinieren der ersten und zweiten Knotenpunkte sowie der ersten und zweiten Kanten zum Erzeugen eines Navigationsgraphen.

Vorzugsweise stellen dabei die einen oder mehreren zusätzlichen Hindernisse bewegliche Hindernisse dar, insbesondere Türen, Fahrstuhltüren, Schranken, Schleusen und/oder Absperrungen.

Die vorliegende Erfindung schafft weiterhin eine Vorrichtung nach Anspruch 10 zum Ermitteln eines Navigationsgraphen für

Ströme von Individuen in einem Gebiet mit einer Vielzahl von Hindernissen, mit einer Ermittlungseinrichtung, welche dazu ausgelegt ist, den jeweils kürzesten Abstand zu einem der Vielzahl von Hindernissen für jeden Punkt des Gebiets zu ermitteln und ein Abstandsfeld für das Gebiet zu erzeugen, einer Berechnungseinrichtung, welche dazu ausgelegt ist, Höhenzüge des Abstandsfelds zu berechnen, und einer Erzeugungseinrichtung, welche dazu ausgelegt ist, Knotenpunkte und Kanten des Navigationsgraphen auf der Basis der berechneten Höhenzüge zu erzeugen.

Die vorliegende Erfindung schafft überdies ein Verfahren nach Anspruch 16 zum Bestimmen einer Navigationsstrategie eines Individuums entlang eines erfindungsgemäß ermittelten Navigationsgraphen, mit den Schritten des Ermittelns der jeweiligen Reisezeit von einem Knotenpunkt zu jeweils einem einer Vielzahl von benachbarten Knotenpunkt entlang jeweils einer die zwei Knotenpunkte verbindenden Kante des Navigationsgraphen, und des Treffens einer Reiseentscheidung für das Individuum entlang des Navigationsgraphen in Abhängigkeit von den ermittelten Reisezeiten.

Dabei kann es vorteilhaft sein, die Reisezeit in Abhängigkeit von der jeweiligen Kante dynamisch zu wählen. Das Treffen der Reiseentscheidung kann vorzugsweise in Abhängigkeit von der Information über die Topologie des Navigationsgraphen erfolgen.

Weitere Modifikationen und Variationen ergeben sich aus den Merkmalen der abhängigen Ansprüche.

Kurze Beschreibung der Zeichnungen

Verschiedene Ausführungsformen und Ausgestaltungen der vorliegenden Erfindung werden nun in Bezug auf die beiliegenden Zeichnungen genauer beschrieben. Es zeigen dabei:

Fig. 1     eine schematische Darstellung eines Gebiets mit einer Vielzahl von Hindernissen;

Fig. 2     eine schematische Darstellung eines Gebiets mit einer Vielzahl von Hindernissen mit einem gemäß einer Ausführungsform der Erfindung erzeugten Navigationsgraphen in dem Gebiet;

Fig. 3a    eine schematische Darstellung eines Erzeugungsalgorithmus für Knotenpunkte und Kanten eines Navigationsgraphen gemäß einer weiteren Ausführungsform der Erfindung;

Fig. 3b    einen schematischen Verfahrensablauf des in Fig. 3a dargestellten Erzeugungsalgorithmus gemäß einer weiteren Ausführungsform der Erfindung;

Fig. 4a    eine schematische Darstellung eines Gebiets mit einer ersten Vielzahl von Hindernissen mit einem gemäß einer weiteren Ausführungsform der Erfindung erzeugten Navigationsgraphen in dem Gebiet;

Fig. 4b    eine schematische Darstellung eines Gebiets mit einer zweiten Vielzahl von Hindernissen mit einem gemäß einer weiteren Ausführungsform der Erfindung erzeugten Navigationsgraphen in dem Gebiet;

Fig. 5     eine schematische Darstellung einer Vorrichtung zum Ermitteln eines Navigationsgraphen für Ströme von Individuen in einem Gebiet mit einer Vielzahl von Hindernissen gemäß einer weiteren Ausführungsform der Erfindung;

Fig. 6     eine schematische Darstellung eines Verfahrens zum Ermitteln eines Navigationsgraphen für Ströme von Individuen in einem Gebiet mit einer Vielzahl von Hin- dernissen gemäß einer weiteren Ausführungsform der Erfindung; und

Fig. 7     eine schematische Darstellung eines Verfahrens zum Ermitteln eines Navigationsgraphen für Ströme von Individuen in einem Gebiet mit einer Vielzahl von Hindernissen gemäß einer weiteren Ausführungsform der Erfindung.

Die beschriebenen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Gleiche Bezugszeichen bezeichnen dabei gleiche oder ähnlich wirkende Komponenten.

Ausführliche Beschreibung der Erfindung

Die Notation eines Graphen bzw. eines Navigationsgraphen, wie sie im Sinne der Erfindung verwendet wird, bezieht sich auf geometrische Konstrukte, die mögliche Wege bzw. Routen durch oder auf einem Gebiet definieren. Dabei erfüllen Navigationsgraphen im Sinne der Erfindung die Voraussetzung, dass je zwei unterschiedliche Wege mit gleichen Start- und Endpunkten auf dem Gebiet durch mindestens ein Hindernis getrennt werden, das heißt, Navigationsgraphen sind minimale Graphen. Hindernisse im Sinne dieser Erfindung sind für Individuen unpassierbare Bereiche auf dem betrachteten Gebiet. Dabei können Hindernisse Wände, Türen, Absperrungen, Mauern oder dergleichen umfassen. Es kann auch möglich sein, dass unpassierbare Gebiete je nach Typ des betrachteten Individuums unterschiedlich definiert werden. So können beispielsweise Treppen für Fahrzeuge unpassierbar sein, für Fußgänger jedoch passierbar. Weiterhin können Hindernisse all diejenigen Bereiche darstellen, die nicht explizit als passierbar gekennzeichnet sind, beispielsweise Bereiche außerhalb eines Schienennetzes für Schienenfahrzeuge.

Gebiete im Sinne der Erfindung sind räumlich in einer oder mehreren Dimensionen, insbesondere zwei oder drei Dimensionen ausgedehnte Bereiche, auf denen sich Hindernisse befinden können. Die Gebiete können beispielsweise Gänge und Räume in Gebäuden, Strassen und Straßenzüge, Veranstaltungsgelände, Schienennetze oder dergleichen sein.

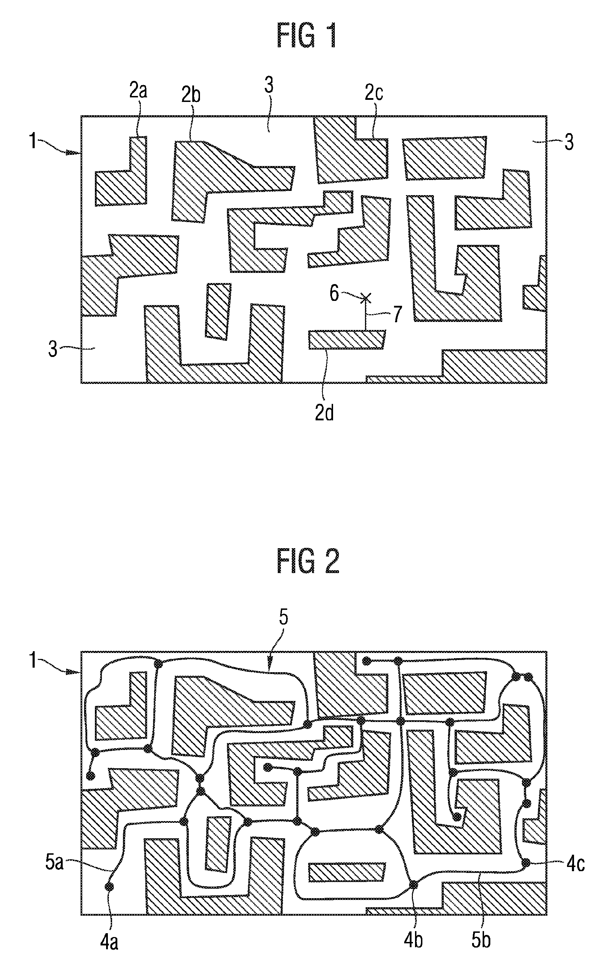

Fig. 1 zeigt eine schematische Darstellung eines Gebiets 1 mit einer Vielzahl von Hindernissen. Das Gebiet 1 weist dabei passierbare Bereiche 3 auf, die teilweise durch Hindernisse 2a, 2b, 2c, 2d getrennt sind. Das Gebiet 1 kann zu Berechnungszwecken in diskrete Unterbereiche aufgeteilt werden, beispielsweise in ein Gitternetz aus Gitterzellen mit vordefinierten Gitterzellengröße. Es kann vorteilhaft sein, lediglich die passierbaren Bereiche 3 in ein derartiges Gittern zu unterteilen, da die Hindernisse 2a, 2b, 2c, 2d ohnehin nicht für die Routenbildung eines Individuums in Frage kommen.

Das Gebiet 1 ist für Simulationen von Verkehrsprozessen vorgesehen, beispielsweise für Bewegungen von Personen über das Gebiet 1. Dabei können Navigationsstrategien von Personen über das Gebiet 1 unter Berücksichtigung der Hindernisse 2a, 2b, 2c, 2d simuliert werden.

Zur Bildung eines Navigationsgraphen, der als grundlegendes Modell für die Ermittlung von Navigationsstrategien von Personen über das Gebiet 1 dienen kann, wird zunächst zu jedem Punkt auf dem Gebiet der jeweils kürzeste Abstand zu einem der Hindernisse 2a, 2b, 2c, 2d ermittelt. Dabei kann die Anzahl der Punkte auf dem Gebiet endlich sein, und insbesondere mit den Gitterzellen des Gitternetzes korrelieren. Es kann beispielsweise vorgesehen sein, jeder Gitterzelle des Gitternetzes einen Punkt zuzuweisen. Der Punkt kann dabei im geometrischen Schwerpunkt der Gitterzelle befindlich sein.

Beispielhaft ist im Gebiet 1 der Punkt 6 dargestellt. Der Punkt 6 befindet sich in einem passierbaren Bereich 3 des Gebiets 1, wodurch sich für den kürzesten Abstand zu einem Hindernis ein Wert größer als Null ergibt. Punkte, deren Abstand zu einem Hindernis Null beträgt, brauchen nicht notwendigerweise weiter berücksichtigt werden, da sie entweder in einem Hindernis oder am Rand eines Hindernisses gelegen sind, und für eine potentielle Bewegung eines Individuums nicht in Frage kommen.

Der Punkt 6 weist einen kürzesten Abstand 7 zu dem Hindernis 2d auf. Dabei kann das Gebiet 1 einen metrischen Raum aufspannen, so dass der kürzeste Abstand 7 gemäß einer Metrik bestimmt werden kann, beispielsweise gemäß einer Ninkowski-Metrik. Derartige Abstandsbestimmungen können dann zum Beispiel gemäß einer Euklidischen Metrik oder einer Manhattan-Metrik erfolgen. Der Abstand kann entweder direkt oder mittels iterativer Algorithmen bestimmt werden. Als iterative Algorithmen eignen sich beispielsweise der Dijkstra-Algorithmus, uniforme Kostensuche oder eine Fast-Marching-Methode.

Die Ermittlung des Abstands 7 erfolgt für jeden der Punkte p in dem Gebiet 1, so dass jedem der Punkte des entsprechende Abstandswert d zugewiesen werden kann. Dadurch wird auf dem Gebiet ein Abstandsfeld $p \rightarrow A(p):=d$ definiert. Das Abstandsfeld A (p) ist ein Skalarfeld, welches in Bereichen, die weit von einem Hindernis weg liegen, größere Werte aufweist, als in Bereichen, die nahe an einem Hindernis liegen. Die Mitten von gleichmäßig breiten Gängen zwischen Hindernissen entsprechen in diesem Bild beispielsweise Isarithmen. Ströme von Individuen tendieren dazu, sich entlang Punkten lokal maximaler Höhe des Abstandsfelds A zu orientieren, um zwischen Hindernissen auf dem Gebiet 1 hindurch zu navigieren. Zur Erzeugung eines realitätsnahen Navigationsgraphen ist es daher vorteilhaft, die entsprechenden Höhenzüge des Abstandsfelds A zu betrachten.

Zur Berechnung der Höhenzüge H des Abstandsfelds A kann beispielsweise eine digitale Laplace-Filterung des Abstandsfelds A verwendet werden. Dazu wird jeder Punkt p des Abstandsfelds A(p) einer Laplace-Filterung mit einer Laplace-Filter-Matrix L unterworfen. Im zweidimensionalen Beispiel der Fig. 1 kann eine Laplace-Filter-Matrix $L_2$ der Form

0 1 0

1 -4 1

0 1 0

verwendet werden. Damit können Höhenzuge H(p=p(x,y)) im Falle eines rechteckigen Gitternetzes zu

$$H(x,y) = A(x+q,y) + A(x-q,y) + A(x,y+q) + A(x,y-q) - 4A(x,y)$$

bestimmt werden. Selbstverständlich ist klar, das für andere Gitternetze andere Laplace-Filter-Matrizen verwendet werden können. Weiterhin ist es möglich, die Laplace-Filterung nur für diejenigen Punkte p zu berechnen, die nicht direkt am Rand des Gitternetzes liegen, also beispielsweise in direkter Nachbarschaft zu einem Hindernis.

Durch die Berechnung der Hihenzüge H(p) kann ein weiteres Skalarfeld H berechnet werden, welches im Bereich von Punkten mit großen kürzesten Abständen zu Hindernissen entsprechende lokale Minima aufweist. Durch Verfolgung dieser lokalen Minima kann automatisch ein Navigationsgraph erzeugt werden.

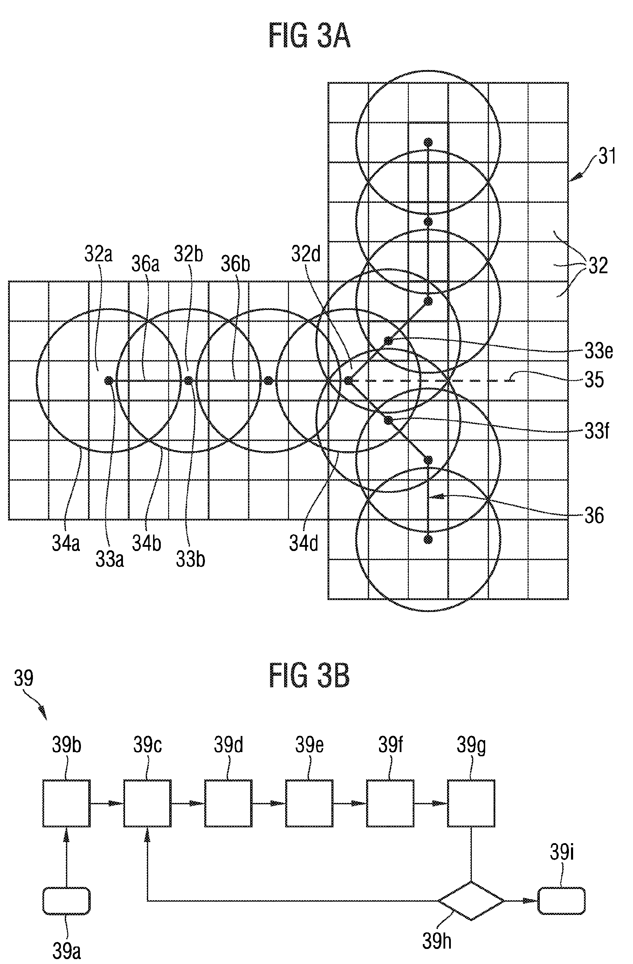

Eine Möglichkeit zur Verfolgung der lokalen Minima des Höhenzugfeldes H ist beispielhaft in Fig. 3a dargestellt. Fig. 3a zeigt eine schematische Darstellung eines Erzeugungsalgorithmus für Knotenpunkte 33a, 33b, 33d und Kanten 36a, 36b eines Navigationsgraphen 36 gemäß einer weiteren Ausführungsform der Erfindung. Gezeigt ist ein Gitternetz 31, welches Gitterzellen 32 aufweist. Beispielhaft ist in Fig. 3a ein zweidimensionales rechteckiges Gitternetz 31 gezeigt, es ist aber ebenso jedes andere Gitternetz möglich. Jede der Gitterzellen 32 weist einen Wert des Höhenzugfeldes H (p) auf.

Im Folgenden wird unter Bezugnahme auf Fig. 3b, in der ein schematischer Verfahrensablauf 39 des in Fig. 3a dargestellten Erzeugungsalgorithmus gemäß einer weiteren Ausführungsform der Erfindung gezeigt wird, die Ermittlung eines Navigationsgraphen 36 aus einem Höhenzugfeld illustriert. In einem ersten Schritt 39a beginnt der Algorithmus. Zunächst wird in einem Schritt 39b diejenige Gitterzelle 32a der Gitterzellen 32 des Gitternetzes 31 ausgewählt, die dem höchsten Wert des Höhenzugfeldes H zugeordnet ist. Im Zentrum der ausgewählten Gitterzelle 32a wird ein erster Knoten 33a des zu erzeugenden Graphen 36 angeordnet. Mit dem Knoten 33a als Mittelpunkt wird in Schritt 39c ein Kreis 34a mit einem vorbestimmten Radius r in dem Gitternetz 31 aufgespannt. Der Radius r kann dabei beliebig gewählt werden, wobei vorzugsweise ein Wert gewählt wird, um etliche Gitterzellen 32 mit dem Kreis 34a zu überspannen.

In einem Schritt 39d wird dann das lokale Minimum des Höhenzugfeldes H auf der Kreislinie ermittelt, das heißt, alle Gitterzellen 32, die von der Kreislinie des Kreises 34a überstrichen werden, werden auf ihren Wert des Skalarfeldes H hin überprüft, um das lokale Minimum zu ermitteln. Im beispielhaft dargestellten Fall in Fig. 3b befindet sich auf der Kreislinie 34a lediglich ein lokales Minimum, welches mit der Gitterzelle 32b zusammenfällt. In diesem Fall wird im Zentrum der ermittelten Gitterzelle 32b ein weiterer Knotenpunkt 33b des Graphen 36 erzeugt, und mit dem Zentrum der Gitterzelle 32b ein neuer Kreis 34b mit dem Radius r definiert. Zwischen den ermittelten Knotenpunkten 32a und 32b kann dann eine erste Kante 36a erzeugt werden.

Es kann jedoch auch sein, dass mehrere lokale Minima des Höhenzugfeldes H auf der Kreislinie ermittelt werden. Beispielhaft ist dies für die Gitterzelle 32d gezeigt, um deren Zentrum eine Kreislinie 34d mit dem Radius r gezogen ist. In diedem Fall können zwei lokale Minima des Höhenfeldzuges H in den Gitterzellen mit den Knotenpunkten 33e und 33f ermittelt werden. Wenn dies der Fall ist, dann liegt in der Gitterzelle 32d ein Gabelungspunkt vor, an dem sich der Graph 36 in zwei Kanten teilt. Um die Knotenpunkte 33e und 33f können dann jeweils wieder Kreislinien mit dem Radius r gezogen werden. In einem Schritt 39e können dann für Knotenpunkte wie die Knotenpunkte 33e und 33f nach Gabelungen bzw. Kreuzungen Minima von den Kreislinien unberücksichtigt bleiben, die jeweils der anderen Kante der Gabelung bzw. Kreuzung zuzuschreiben sind. Hierzu kann es vorteilhaft sein, eine Winkelhalbierende 35 zu definieren, die das Gitternetze in zwei Bereiche unterschiedlicher Kanten aufteilt. Für die Ermittlung neuer lokaler Minima werden dann nur diejenigen Kreisliniensegrrente berücksichtigt, die sich auf der Zentrumsseite der Winkelhalbierenden 35 befinden.

In einem Schritt 39f werden alle generierten Knotenpunkte über Kanten mit den vorhergehend generierten Knotenpunkten verbunden, und vorhergehende Knotenpunkte, die lediglich über zwei Kanten mit benachbarten Knotenpunkten verbunden sind, entfernt, da diese Knotenpunkte redundant sind. Die zwei zu diesem entfernten Knotenpunkt gehörigen Kanten können dann an dem entfernten Knotenpunkt zu einer einzigen durchgehenden Kante verbunden werden.

In einem Schritt 39g werden alle generierten Knotenpunkte als neue Startpunkte für die Bestimmung von Kreislinien definiert. Solange in einem Schritt 39h festgestellt wird, dass noch zuletzt gefundene Knotenpunkte vorhanden sind, wird der Algorithmus bei Schritt 39c begonnen. Sollte kein weiterer Knotenpunkt mehr gefunden werden, gilt der Graph als fertig gestellt und der Algorithmus endet bei Schritt 39i.

Es kann weiterhin auch vorgesehen sein, Knotenpunkte, die in "Ecken" liegen, also die in ihrer unmittelbaren Nachbarschaft ein Hindernis aufweisen, ebenfalls von dem Graph zu entfernen. Dadurch kann das Auftreten von "Sackgassen" vermieden werden. Hierzu kann es vorgesehen sein, in der lokalen Umgebung, beispielsweise innerhalb eines vorbestimmten Radius, von Knotenpunkten eine Überprüfung auf das Vorhandensein von Hindernisse vorzunehmen, und bei einem Auftreten eines Hindernis den Knotenpunkt als in einer "Ecke" liegend zu entfernen.

Mit Hilfe des vorstehend genannten Verfahrens kann auf einfache, schnelle und automatische Weise ein Navigationsgraph 36 ermittelt werden. Selbstverständlich sind viele verschiedene andere Möglichkeiten denkbar, mithilfe derer ein entsprechender Navigationsgraph erzeugt werden kann. Fig 2 zeigt eine schematische Darstellung des Gebiets 1 mit einer Vielzahl von Hindernissen mit einem gemäß einer Ausführungsform der Erfindung erzeugten Navigationsgraphen 5 in dem Gebiet 1. Der Navigationsgraph 5 kann dabei dem Navigationsgraph 36 aus Fig. 3a entsprechen. Insbesondere umfasst der Navigationsgraph 5 Knotenpunkte 4a, 4b, 4c, die den mit dem in Fig. 3b dargestellten Algorithmus erzeugten Knotenpunkten entsprechen können. Der Knotenpunkt 4a kann dabei beispielsweise ein Startknotenpunkt sein, der über eine einzige Kante 5a mit einem benachbarten Knotenpunkt verbunden ist. Der Knotenpunkt 4b kann beispielsweise ein Gabelungs- bzw. Kreuzungsknotenpunkt sein, an dem mehr als zwei Kanten des Navigationsgraphen 5 zusammenlaufen. Der Knotenpunkt 4b ist mit dem Knotenpunkt 4c über eine Kante 5b verbunden. Der Knotenpunkt 4c ist ein Knotenpunkt, der über zwei Kanten mit jeweils zwei benachbarten Knotenpunkten verbunden ist.

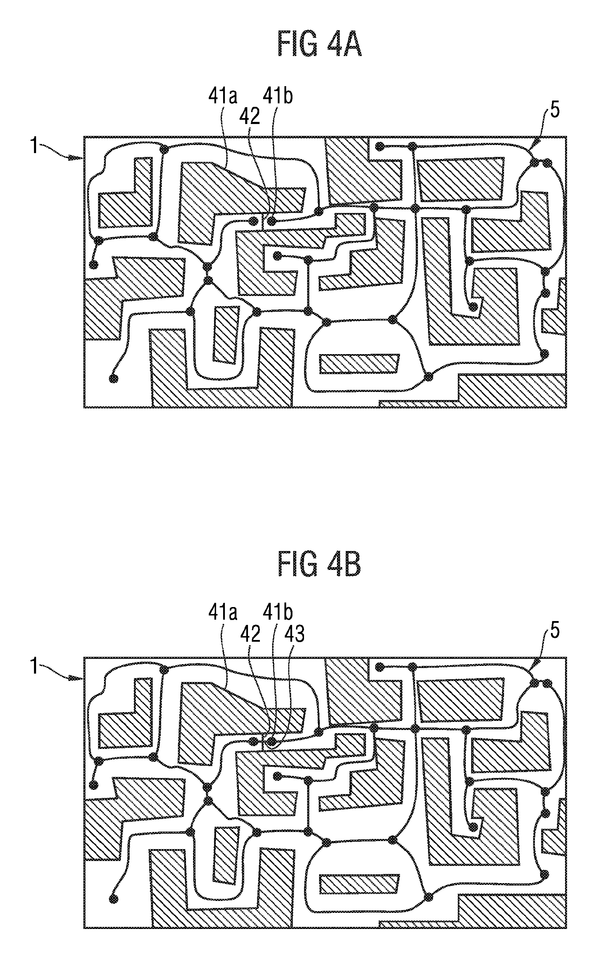

Der in Fig. 2 dargestellte Navigationsgraph 5 berücksichtigt nur eine statische Hindernisstruktur, das heißt, dass sich die Hindernisse stets an denselben Positionen befinden und über die Zeit unveränderlich sind. Es kann jedoch auch Hindernisse geben, die ihre Position verändern oder über die Zeit hinweg ihre Passierbarkeit für Ströme von Individuen verändern. In Fig. 4a ist beispielhaft ein Gebiet 1 gezeigt, in dem ein zusätzliches, weiteres Hindernis 42 eingefügt worden ist. Das Hindernis 42 kann beispielsweise eine Tür in einem Gang eines Gebäudes sein. Im geschlossenen Zustand kann die Tür als für Individuen unpassierbar gelten, im geöffneten Zustand dagegen als passierbar. Diesem Umstand kann Rechnung getragen werden, indem zunächst ein erster Navigationsgraph 5 erzeugt wird, in dem das zusätzliche Hindernis 42 als unpassierbar gilt. In diesem Fall wird ein Navigationsgraph 5 wie in Fig. 4a erzeugt, der in der Nähe des Hindernisses 42 Knotenpunkte 41a und 41b aufweist, die nicht über eine direkte Kante verbunden sind. Danach kann ein zweiter Navigationsgraph 5 erzeugt werden, in dem das zusätzliche Hindernis 42 als passierbar gilt. In letzterem Fall wird ein Navigationsgraph 5 erzeugt, wie er in Fig. 2 gezeigt ist.

Vergleicht man nun die beiden erzeugten Navigationsgraphen durch Überlagerung, kann über die Kombination der beiden Navigationsgraphen ein einheitlicher Navigationsgraph erzeugt werden. Hierzu kann wie in Fig. 4b beispielhaft gezeigt, eine zusätzliche Kante 43 zwischen den Knotenpunkten 41a und 41b eingefügt werden, die dem Kantenverlauf des Navigationsgraphen 5 in Fig. 2 entspricht. Weiterhin kann der zusätzlichen Kante 43 der Passierbarkeitszustand des zusätzlichen Hindernisses 42 zugeordnet werden und in einer Bestimmung einer Navgationsstrategie für Ströme von Individuen auf dem kombinierten Navigationsgraphen 5 berücksichtigt werden. Selbstverständlich ist die Anzahl der zusätzlich berücksichtigten Hindernisse nicht auf eines begrenzt, sondern es können beliebig viele zusätzliche Hindernisse mit unterschiedlichen Passierbarkeitszuständen in das Gebiet 1 eingefügt werden. So kann beispielsweise eine Fahrstuhltür nur in periodischen Abständen als passierbar, oder eine Feuertür als nur in Notfallszenarien passierbar eingestuft werden.

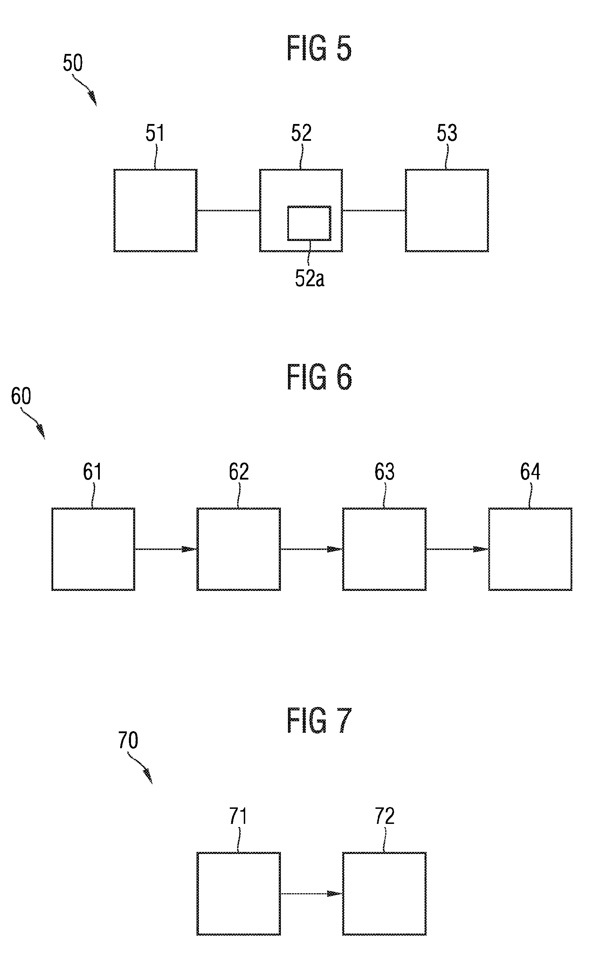

Fig. 5 zeigt eine schematische Darstellung einer Vorrichtung 50 zum Ermitteln eines Navigationsgraphen für Ströme von Individuen in einem Gebiet mit einer Vielzahl von Hindernissen gemäß einer weiteren Ausführungsform der Erfindung. Insbesondere kann die Vorrichtung 50 dazu ausgelegt sein einen Navigationsgraphen 5 gemäß einer der vorstehend genannten erfindungsgemäßen Verfahren zu erzeugen.

Die Vorrichtung 50 umfasst dabei eine Ermittlungseinrichtung 51, welche dazu ausgelegt ist, den jeweils kürzesten Abstand zu einem der Vielzahl von Hindernissen für jeden Punkt des Gebiets zu ermitteln und ein Abstandsfeld für das Gebiet zu erzeugen.

Die Vorrichtung 50 umfasst weiterhin eine Berechnungseinrichtung 52, welche dazu ausgelegt ist, Höhenzüge des Abstandsfelds zu berechnen. Die Berechnungseinrichtung 52 kann beispielsweise eine Laplace-Filter-Einrichtung 52 umfassen, welche dazu ausgelegt ist, eine Laplace-Filterung von oben erläuterten Abstandsfeldern mithilfe von Laplace-Filter-Matrizen durchzuführen.

Die Vorrichtung 50 umfasst weiterhin eine Erzeugungseinrichtung 53, welche dazu ausgelegt ist, Knotenpunkte und Kanten des Navigationsgraphen auf der Basis der berechneten Höhenzüge zu erzeugen.

Fig. 6 zeigt ein Verfahren 60 zum Ermitteln eines Navigationsgraphen für Ströme von Individuen in einem Gebiet mit einer Vielzahl von Hindernissen. In einem ersten Schritt 61 erfolgt ein Ermitteln des jeweils kürzesten Abstands zu einem der Vielzahl von Hindernissen für jeden Punkt des Gebiets zum Erzeugen eines Abstandsfelds für das Gebiet. In einem zweiten Schritt 62 erfolgt ein Berechnen von Höhenzügen des Abstandsfelds. In einem dritten Schritt 63 erfolgt ein Erzeugen von

Knotenpunkten und Kanten des Navigationsgraphen auf der Basis der berechneten Höhenzüge. In einem vierten Schritt 64 kann dabei ein Entfernen aller erzeugten Knotenpunkte und Kanten, welche lediglich mit einem anderen Knotenpunkt verbunden sind, erfolgen.

Fig. 7 zeigt ein Verfahren 70 zum Bestimmen einer Navigationsstrategie eines Individuums entlang eines erfindungsgemäß ermittelten Navigationsgraphen, beispielsweise mit Hilfe einem Verfahren 60 Gemäß Fig. 6.

Beispielsweise kann eine Bewegung von Personen auf einem erfindungsgemäß erzeugten Navigationsgraphen, wie zum Beispiel einem Navigationsgraphen 5, stattfinden. Dabei kann vorgesehen sein, dass sich die Personen einen Weg durch den Navigationsgraphen suchen, indem an jedem Knotenpunkt eine Entscheidung über die Fortsetzung der Bewegung entlang einer von diesem Knotenpunkt ausgehenden Kante getroffen wird. Dabei kann die Zielsetzung der Personen variabel gestaltet werden. Beispielsweise kann die Zielsetzung der Personen das möglichst schnelle Durchlaufen des Navigationsgraphen von einem Ausgangsknotenpunkt zu einem Zielknotenpunkt betreffen. Es kann auch möglich sein, das die Zielsetzung der Navigationsstrategie von Personen von anderen Parametern, beispielsweise dem Vorhandensein von Treppen oder Staus entlang des wählbaren Weges abhängig ist.

In einem ersten Schritt 71 kann daher die jeweilige Reisezeit R von einem Knotenpunkt zu jeweils einem einer Vielzahl von benachbarten Knotenpunkt entlang jeweils einer die zwei Knotenpunkte verbindenden Kante des Navigationsgraphen ermittelt werden. Die Reisezeit R kann dabei für jede Kante dynamisch festgelegt werden. Beispielsweise kann die Reisezeit R von Staus auf der jeweiligen Kante oder dem Vorhandensein von variablen Hindernissen wie Türen abhängen. Die Reisezeit R kann individuell für jedes Individuum bzw. jede Person modelliert werden und kann insbesondere stark vom betroffenen Personentyp und/oder der Zielsetzung der zu modellierenden Person abhängen.

In einer gegebenen Topologie können sich die Navigationsstrategien von Personen in Abhängigkeit ihres Typs stark unterscheiden. Extrema von unterschiedlichen Personentypen bilden beispielsweise Personen mit unterschiedlichem Kenntnisstand über die gesamte Topologie. Beispielsweise kann eine Person omniszient agieren, das heißt, das komplette Gebiet bzw. den kompletten Mavigationsgraphen inklusive aller zugehörigen Reisezeiten kennen. Im anderen Extrem kann eine Person vollkommen unwissend über die Topologie bzw. die Geometrie des Gebiets sein. Es können auch Mischformen dieser Personentypen existieren, die einen gewissen begrenzten Überblick über die Topologie des Gebiets haben, oder die sich im Verlauf der Wegefindung von einem unwissenden zu einem wissenden Individuum entwickeln, beispielsweise weil sie auf eine Hinweistafel mit einer Karte gestoßen sind. Es kann auch möglich sein, Individuen als pluralistisch ignorant zu modellieren, in denen die Wegeentscheidung eines Individuums in einer unklaren Entscheidungsfindungssituation von der Entscheidungsfindung anderer an diesem Knotenpunkt befindlicher Individuen abhängt.

In einem Schritt 72 kann daher eine Reiseentscheidung für das Individuum entlang des Navigationsgraphen in Abhängigkeit von den ermittelten Reisezeiten getroffen werden. Diese Entscheidung kann beispielsweise vom Personentyp abhängen. Je nach Personentyp kann in die Wegewahl an einem Knotenpunkt des Navigationsgraphen eine variable Menge an Information impliziert werden, und somit die Entscheidungsfindung des Individuums werde. In einer Ausführungsform kann zu Beginn einer Simulation zwischen den Personentypen unterschieden werden, um für jeden der Personentypen einen Teilgraphen zu konstruieren. Dadurch kann ein vorhandener Speicher für Simulationen optimal genutzt werden. Es kann auch vorgesehen sein, vergangene Simulationsergebnisse für den jeweiligen Navigationsgraphen zu verwenden und eine Reduktion der Komplexität und damit eine Optimierung der Rechenzeit und/oder des Speicherbedarfs zu erreichen.

**Patentansprüche**

1. Verfahren (60) zum Ermitteln eines Navigationsgraphen (5) für Ströme von Individuen in einem Gebiet (1) mit einer Vielzahl von Hindernissen (2a, 2b, 2c, 2d), mit den Schritten:

   Ermitteln des jeweils kürzesten Abstands (7) zu einem der Vielzahl von Hindernissen (2a, 2b, 2c, 2d) für jeden Punkt (6) des Gebiets (1) zum Erzeugen eines Abstandsfelds (A) für das Gebiet (1);
   Berechnen von Höhenzügen (H) des Abstandsfelds (A); und
   Erzeugen von Knotenpunkten (4a, 4b, 4c) und Kanten (5a, 5b) des Navigationsgraphen (5) auf der Basis der berechneten Höhenzüge (H).

2. Verfahren (60) nach Anspruch 1, wobei das Berechnen von Höhenzügen (H) des Abstandsfelds (A) ein Laplace-Filtern des Abstandsfelds (A) umfasst.

3. Verfahren (60) nach Anspruch 1 oder 2, weiterhin mit dem Schritt:

   Entfernen aller erzeugten Knotenpunkte (4a, 4b, 4c) und
   Kanten (5a, 5b), welche lediglich mit einem anderen Knotenpunkt (4a, 4b, 4c) verbunden sind.

4. Verfahren (60) nach einem der vorangehenden Ansprüche, wobei das Gebiet (1) ein zweidimensionales Gebiet (1) ist, und wobei die Vielzahl der Hindernisse (2a, 2b, 2c, 2d) für die Individuen unpassierbare Bereiche des Gebiets (1) darstellen.

5. Verfahren (60) nach Anspruch 4, wobei die Individuen Personen sind, und wobei der Navigationsgraph (5) mögliche Bewegungsrouten der Personen beschreibt.

6. Verfahren (60) nach einem der vorangehenden Ansprüche, wobei der kürzeste Abstand (7) in einer Manhattan-Metrik oder einer Euklidischen Metrik bestimmt wird.

7. Verfahren (60) zum Ermitteln eines Navigationsgraphen (5) für Ströme von Individuen in einem Gebiet (1) mit einer ersten Vielzahl von Hindernissen (2a, 2b, 2c, 2d), mit den Schritten:

   Ermitteln des jeweils kürzesten Abstands (7) von einem der ersten Vielzahl von Hindernissen (2a, 2b, 2c, 2d) für jeden Punkt (6) des Gebiets (1) zum Erzeugen eines ersten Abstandsfelds (A) für das Gebiet (1);
   Berechnen von ersten Höhenzügen (H) des ersten Abstandsfelds (1);
   Erzeugen von ersten Knotenpunkten (4a, 4b, 4c) und ersten Kanten (5a, 5b) auf der Basis der berechneten ersten Höhenzüge (H);
   Hinzufügen eines oder mehrerer zusätzlicher Hindernisse (42) in dem Gebiet (1) zu der ersten Vielzahl von Hindernissen (2a, 2b, 2c, 2d) zum Erzeugen einer zweiten Vielzahl von Hindernissen (2a, 2b, 2c, 2d; 42);
   Ermitteln des jeweils kürzesten Abstands (7) von einem der zweiten Vielzahl von Hindernissen (2a, 2b, 2c, 2d; 42) für jeden Punkt (6) des Gebiets (1) zum Erzeugen eines zweiten Abstandsfelds (A) für das Gebiet (1);
   Berechnen von zweiten Höhenzügen (H) des zweiten Abstandsfelds (A);
   Erzeugen von zweiten Knotenpunkten (4a, 4b, 4c; 41a, 41b) und zweiten Kanten (5a, 5b; 43) auf der Basis der berechneten zweiten Höhenzüge (H); und
   Kombinieren der ersten und zweiten Knotenpunkte (4a, 4b, 4c; 41a, 41b) sowie der ersten und zweiten Kanten (5a, 5b; 43) zum Erzeugen eines Navigationsgraphen (5).

8. Verfahren (60) nach Anspruch 7, wobei die einen oder mehreren zusätzlichen Hindernisse (42) bewegliche Hindernisse darstellen.

9. Verfahren (60) nach Anspruch 8, wobei die beweglichen Hindernisse Türen, Fahrstuhltüren, Schranken, Schleusen und/oder Absperrungen umfassen.

10. Vorrichtung (50) zum Ermitteln eines Navigationsgraphen (5) für Ströme von Individuen in einem Gebiet (1) mit einer Vielzahl von Hindernissen (2a, 2b, 2c, 2d), mit:

    einer Ermittlungseinrichtung (51), welche dazu ausgelegt ist, den jeweils kürzesten Abstand (7) zu einem der Vielzahl von Hindernissen (2a, 2b, 2c, 2d) für jeden Punkt (6) des Gebiets (1) zu ermitteln und ein Abstandsfeld (A) für das Gebiet (1) zu erzeugen;

einer Berechnungseinrichtung (52), welche dazu ausgelegt ist. Höhenzüge (H) des Abstandsfelds (A) zu berechnen; und

einer Erzeugungseinrichtung (53), welche dazu ausgelegt ist, Knotenpunkte (4a, 4b, 4c) und Kanten (5a, 5b) des Mavigationsgraphen (5) auf der Basis der berechneten Höhenzüge (H) zu erzeugen.

11. Vorrichtung (50) nach Anspruch 10, wobei die Berechnungseinrichtung (52) einen Laplace-Filter-Einrichtung (52a) aufweist.

12. Vorrichtung (50) nach Anspruch 10 oder 11, wobei die Erzeugungseinrichtung (53) weiterhin dazu ausgelegt ist, alle erzeugten Knotenpunkte (4a, 4b, 4c) und Kanten (5a, 5b), welche lediglich mit einem anderen Knotenpunkt (4a, 4b, 4c) verbunden sind, von dem Navigationsgraphen (5) zu entfernen.

13. Vorrichtung (50) nach einem der Ansprüche 10 bis 12, wobei das Gebiet (1) ein zweidimensionales Gebiet (1) ist, und wobei die Vielzahl der Hindernisse (2a, 2b, 2c, 2d) für die Individuen unpassierbare Bereiche des Gebiets (1) darstellen.

14. Vorrichtung (50) nach Anspruch 13, wobei die Individuen Personen sind, und wobei der Navigationsgraph (5) mögliche Bewegungsrouten der Personen beschreibt.

15. Vorrichtung (50) nach einem der Ansprüche 10 bis 14, wobei die Ermittlungseinrichtung (51) dazu ausgelegt ist, den jeweils kürzesten Abstand (7) in einer Manhattan-Metrik oder einer Euklidischen Metrik zu bestimmen.

16. Verfahren (70) zum Bestimmen einer Navigationsstrategie eines Individuums entlang eines mit einem gemäß einem der Ansprüche 1 bis 9 ermittelten Navigationsgraphen (5), mit den Schritten:

Ermitteln (71) der jeweiligen Reisezeit (R) von einem Knotenpunkt (4b) zu jeweils einem einer Vielzahl von benachbarten Knotenpunkte (4c) entlang jeweils einer die zwei Knotenpunkte verbindenden Kante (5b) des Navigationsgraphen (5); und

Treffen (72) einer Reiseentscheidung für das Individuum entlang des Navigationsgraphen (5) in Abhängigkeit von den ermittelten Reisezeiten (R).

17. Verfahren (70) nach Anspruch 16, wobei die Reisezeit (R) in Abhängigkeit von der jeweiligen Kante (5b) dynamisch ist.

18. Verfahren (70) nach Anspruch 16 oder 17, wobei das Treffen der Reiseentscheidung in Abhängigkeit von der Information über die Topologie des Navigationsgraphen (5) erfolgt.

## FIG 1

## FIG 2

# FIG 3A

# FIG 3B

## FIG 4A

## FIG 4B

# FIG 5

50

| 51 | 52 | 53 |
| --- | --- | --- |
| | 52a | |

# FIG 6

60

| 61 | 62 | 63 | 64 |
| --- | --- | --- | --- |

# FIG 7

70

| 71 | 72 |
| --- | --- |

Europäisches
Patentamt

European
Patent Office

Office européen
des brevets

## EUROPÄISCHER RECHERCHENBERICHT

**Nummer der Anmeldung**

EP 10 19 5450

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Rahulnath, Dietepiet: "Constructing a navigation graph", GameDev.net, 16. Februar 2009 (2009-02-16), XP002639030, Gefunden im Internet: URL:http://www.gamedev.net/topic/524802-constructing-a-navigation-graph/ [gefunden am 2011-05-23] * das ganze Dokument * ----- | 1-18 | INV. G06N3/00 |
| X | S. Garrido, D. Blanco, M. L. Munoz, L. Moreno, M. Abderrahim: "Sensor-based global planning for mobile manipulators navigation using voronoi diagram and fast marching" In: S. Kolski: "Mobile robots: Perception & navigation", Februar 2007 (2007-02), InTech publisher, XP002639031, ISBN: 3-86611-283-1 Seiten 479-496, * das ganze Dokument * ----- | 1-18 | |
| X | A. KNEIDL, A. BORRMANN, D. HARTMANN: "Einsatz von graphbasierten Ansaetzen in einer mikroskopischen Personenstromsimulation fuer die Wegewahl der Fussgaenger", TAGUNGSBAND DES 22. FORUM BAUINFORMATIK, 29. September 2010 (2010-09-29), XP002635309, * das ganze Dokument * ----- -/-- | 1-18 | |

**RECHERCHIERTE SACHGEBIETE (IPC)**

G06N
G06F

Der vorliegende Recherchenbericht wurde für alle Patentansprüche erstellt

| Recherchenort | Abschlußdatum der Recherche | Prüfer |
|---|---|---|
| Den Haag | 27. Mai 2011 | Douarche, Nicolas |

| Europäisches Patentamt European Patent Office Office européen des brevets | EUROPÄISCHER RECHERCHENBERICHT | Nummer der Anmeldung EP 10 19 5450 |
| --- | --- | --- |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
| --- | --- | --- | --- |
| A | D. HARTMANN: "Adaptive pedestrian dynamics based on geodesics", NEW JOURNAL OF PHYSICS, Bd. 12, Nr. 4, 43032, 14. April 2010 (2010-04-14), XP020176119, * das ganze Dokument * ----- | 1-18 | |
| | | | RECHERCHIERTE SACHGEBIETE (IPC) |

Der vorliegende Recherchenbericht wurde für alle Patentansprüche erstellt

| Recherchenort | Abschlußdatum der Recherche | Prüfer |
| --- | --- | --- |
| Den Haag | 27. Mai 2011 | Douarche, Nicolas |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
.............................................................................................
& : Mitglied der gleichen Patentfamilie, übereinstimmendes
Dokument

EPO FORM 1503 03.82 (P04C03)